# EUROPEAN PATENT APPLICATION

(11) **EP 4 462 893 A1**
(43) Date of publication of application: **13.11.2024**
(21) Application number: 22918133.4
(22) Date of filing: 21.06.2022
(51) Int. Cl.: H04W 56/00

(54) **INFORMATION RECEIVING METHOD, INFORMATION SENDING METHOD, COMMUNICATION NODE, AND STORAGE MEDIUM**

(30) Priority: 05.01.2022 CN 202210006722
(71) Applicant: ZTE Corporation, Shenzhen, Guangdong 518057 (CN)
(72) Inventor: TAN, Jie, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN); CHEN, Yongbo, Shenzhen, Guangdong 518057 (CN)
(74) Representative: Vossius & Partner Patentanwälte Rechtsanwälte mbB
(86) International application number: PCT/CN2022/100206
(87) International publication number: WO 2023/130677

(57) **Abstract**

Provided are an information receiving method, an information sending method, a communication node, and a storage medium. The information receiving method includes receiving first information sent by a second communication node, where the first information is configured to instruct the first communication node to initiate propagation delay measurement; and measuring a propagation delay according to the first information.

## Description

### CROSS-REFERENCES TO RELATED APPLICATIONS

This application is based on and claims priority to Chinese Patent Application No. 202210006722.2 filed Jan. 5, 2022, the disclosure of which is incorporated herein by reference in its entirety.

### TECHNICAL FIELD

The present application relates to the field of communication technology, for example, an information receiving method, an information sending method, a communication node, and a storage medium.

### BACKGROUND

Currently, in the research on the 5th-generation (5G) New Radio (NR) technology, it is found that the timing synchronization error between a base station and a terminal device does not exceed 540 nanosecond (*ns).* Propagation delays from different terminal devices in a cell may vary with the devices' distance from the base station. To ensure orthogonality between different terminal devices, transmissions need to be aligned within the cyclic prefix duration of the receiving end. Therefore, how to compensate for the propagation delay becomes an urgent problem that needs to be solved.

### SUMMARY

Embodiments of the present application provide an information receiving method. The information receiving method is applied to a first communication node and includes the following. First information sent by a second communication node is received, and the first information is configured to instruct the first communication node to initiate propagation delay measurement. A propagation delay is measured according to the first information.

Embodiments of the present application provide an information sending method. The information sending method is applied to a second communication node and includes the following.

First information is sent to a first communication node, and the first information is configured to instruct the first communication node to initiate propagation delay measurement.

Embodiments of the present application provide an information sending method. The information sending method is applied to a third communication node and includes the following.

Third information is sent to a second communication node, the third information is dedicated information for a request, and a first communication node is to switch from the second communication node to the third communication node.

Embodiments of the present application provide a communication node. The communication node includes a processor which, when executing a computer program, implements the method of any of the preceding embodiments.

Embodiments of the present application also provide a computer-readable storage medium storing a computer program which, when executed by a processor, implements the method of any of the preceding embodiments.

The preceding embodiments and other aspects of the present application and implementations thereof are described in more detail in the brief description of drawings, detailed implementations, and claims.

### BRIEF DESCRIPTION OF DRAWINGS

FIG. 1 is a diagram illustrating the networking of a wireless communication system according to an embodiment.
FIG. 2 is a diagram illustrating the networking of another wireless communication system according to an embodiment.
FIG. 3 is a flowchart of an information receiving method according to an embodiment.
FIG. 4 is a flowchart of an information sending method according to an embodiment.
FIG. 5 is a flowchart of another information sending method according to an embodiment.
FIG. 6 is a diagram illustrating the flow interaction of an information transmission method according to an embodiment.
FIG. 7 is a diagram illustrating the flow interaction of another information transmission method according to an embodiment.
FIG. 8 is a diagram illustrating the flow interaction of yet another information transmission method according to an embodiment.
FIG. 9 is a diagram illustrating the flow interaction of yet another information transmission method according to an embodiment.
FIG. 10 is a diagram illustrating the flow interaction of yet another information transmission method according to an embodiment.
FIG. 11 is a diagram of a handover process according to an embodiment.
FIG. 12 is a diagram illustrating the flow interaction of yet another information transmission method according to an embodiment.
FIG. 13 is a diagram of another handover process according to an embodiment.
FIG. 14 is a diagram illustrating the flow interaction of yet another information transmission method according to an embodiment.
FIG. 15 is a diagram illustrating the structure of an information receiving apparatus according to an embodiment.
FIG. 16 is a diagram illustrating the structure of another information receiving apparatus according to an embodiment.
FIG. 17 is a diagram illustrating the structure of an information sending apparatus according to an embodiment.
FIG. 18 is a diagram illustrating the structure of another information sending apparatus according to an embodiment.
FIG. 19 is a diagram illustrating the structure of yet another information sending apparatus according to an embodiment.
FIG. 20 is a diagram illustrating the structure of yet another information sending apparatus according to an embodiment.
FIG. 21 is a diagram illustrating the structure of a base station according to an embodiment.
FIG. 22 is a diagram illustrating the structure of a UE according to an embodiment.

### DETAILED DESCRIPTION

It is to be understood that the specific embodiments described herein are intended to explain the present application and not to limit the present application. Embodiments of the present application are described hereinafter in detail in conjunction with drawings.

Currently, the Long-Term Evolution (LTE) system specifies that the network makes reference to the indicated reference time, that is, the LTE system does not compensate for a radio frequency (RF) propagation delay. However, in the 5G NR Industrial Internet of Things (IIOT) research project, the radio access network (RAN) analyzes the time synchronization accuracy that may be achieved on a UU interface between the next generation NodeB (gNB) and a single user equipment (UE). According to the assessment of the RAN, the timing synchronization error between the gNB and the UE does not exceed 540 *ns.* For a small service area deployed in dense cells, propagation delay compensation may not be required. For a larger service area deployed in a sparse cell, for example, the cell radius exceeds 200 meters, propagation delay compensation needs to be applied.

Propagation delays from different user equipment in a cell may vary with the equipment's distance from the base station. The 3rd Generation Partnership Project (3GPP) system based on orthogonal frequency division multiplexing (OFDM), such as the LTE system and the NR system, is very sensitive to the time deviation between transmissions of different UE caused by propagation delays. To ensure orthogonality between different UE, transmissions need to be aligned within the cyclic prefix duration of the receiving end. Therefore, how to compensate for the propagation delay becomes an urgent problem that needs to be solved.

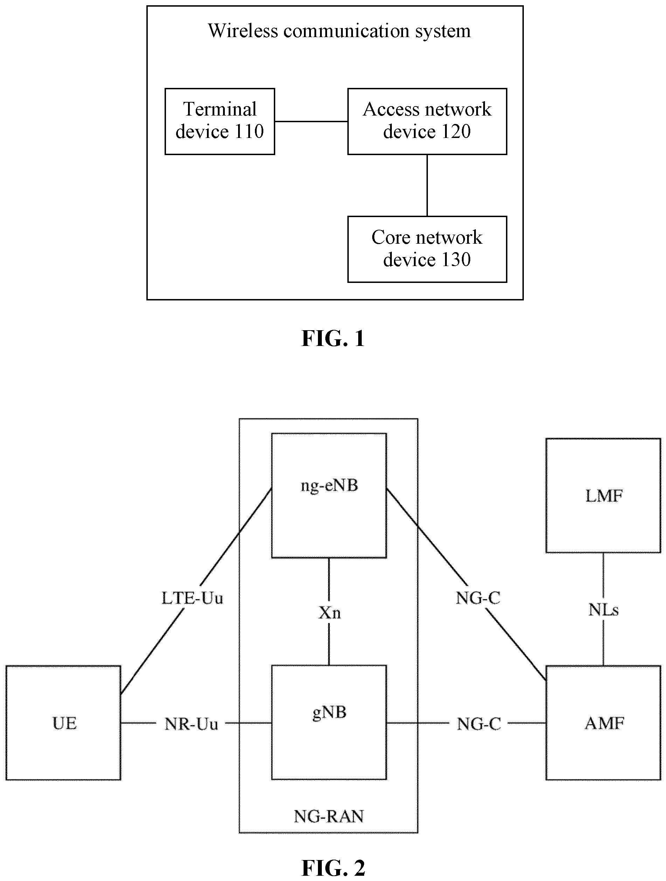

The information receiving method and the information sending method provided by the present application may be applied to various types of wireless communication systems, such as an LTE system, a 5G system, an LTE and 5G hybrid architecture system, a 5G NR system, and a new communication system emerging in future communication development, for example, a 6th-generation (6G) mobile communication technology system. FIG. 1 is a diagram illustrating the networking of a wireless communication system according to an embodiment. As shown in FIG. 1, the wireless communication system includes a terminal device 110, an access network device 120, and a core network device 130.

The terminal device 110 may also be referred to as a terminal, UE, a mobile station, or a mobile terminal. The terminal device may be a device providing voice/data connectivity to a user, for example, a handheld device having a wireless connection function and an in-vehicle device. Some examples of the terminal are as follows: a mobile phone, a tablet computer, a computer having wireless transceiving functions, a virtual reality (VR) terminal device, an augmented reality (AR) terminal device, a wireless terminal in industrial control, a wireless terminal in self-driving, a wireless terminal in telesurgery, a wireless terminal in a smart grid, a wireless terminal in transportation safety, a wireless terminal in a smart city, and a wireless terminal in smart home. The embodiments of the present application do not limit the specific technology and the specific device configuration used by the terminal device.

The access network device 120 is an access device through which the terminal device 110 wirelessly accesses the wireless communication system and may be a base station, an evolved NodeB (eNodeB), a transmission reception point (TRP), a gNB, a base station in a future mobile communication system, and an access node in a Wireless Fidelity system. The access network device 120 may also be a module or unit that performs part of functions of the base station, for example, a central unit (CU) or a distributed unit (DU). The embodiments of the present application do not limit the specific technology and the specific device configuration used by the access network device.

The core network device 130 may include an access and mobility management network element and a session management network element. Illustratively, the terminal device 110 may access the core network through the access network device 120, thereby enabling data transmission. Since the information receiving method and the information sending method of the present application are mainly based on the 5G mobile communication technology and other future mobile communications technologies, another wireless communication system architecture, that is, the 5G system architecture of the embodiments of the present application is introduced with reference to FIG. 2. FIG. 2 is a diagram illustrating the networking of another wireless communication system according to an embodiment.

As shown in FIG. 2, a terminal device (UE is used as an example) is connected to a radio access network via the LTE-UU interface and/or the NR-UU interface and then via a next-generation eNodeB (ng-eNB) and a gNB. The radio access network is connected to the core network via the NG-C interface and then via the Access and Mobility Management Function (AMF). The Next Generation Radio Access Network (NG-RAN) includes one or more ng-eNBs and one or more gNBs. The ng-eNB is an LTE base station accessing the 5G core network. The gNB is a 5G base station accessing the 5G core network. The core network includes functions such as AMF and location management function (LMF). AMF is configured to implement functions such as access management, while LMF is configured to implement functions such as positioning. AMF and LMF are connected through the NLs interface. LMF is a device or component deployed in the core network to provide positioning functions to the UE.

It can be understood that the network architecture of the embodiments of the present application is not limited thereto, and any network architecture that can implement functions of the preceding network elements is applied to the embodiments of the present application. In addition, names of network elements (such as AMF and LMF) included in FIG. 2 are only an example and do not limit the functions of the network elements. In the 5G network and other networks in the future, the preceding network elements may also have other names, which is not specifically limited by the embodiments of the present application. For example, in a 6G network, some or all of the preceding network elements may use the terminology used in 5G or may adopt other names.

In the embodiments of the present application, an information receiving method, an information sending method, a communication node, and a storage medium that can run in the preceding wireless communication system are provided, and a strategy for compensating for propagation delay is proposed, so as to improve the communication quality and the reliability of the communication system.

The information receiving method, the information sending method, the communication node, and the technical effects thereof are described below.

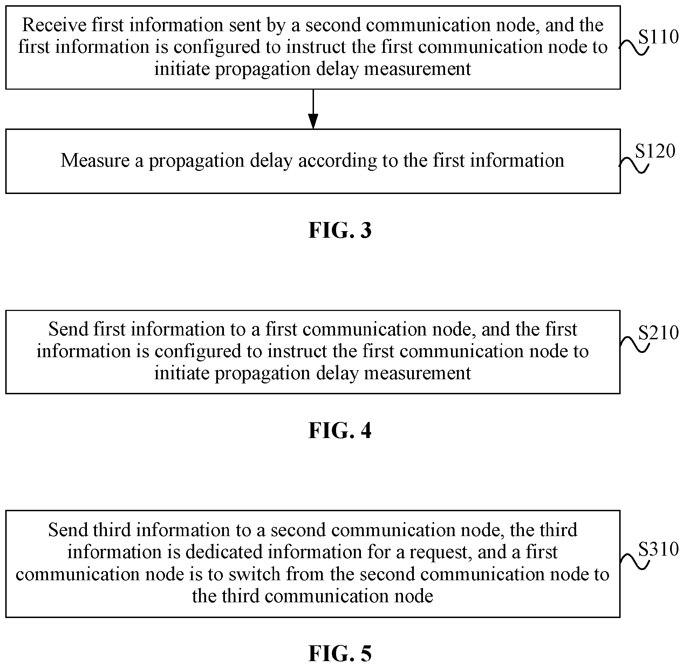

FIG. 3 is a flowchart of an information receiving method according to an embodiment. As shown in FIG. 3, the method provided in this embodiment is applied to a first communication node (such as UE). The method includes the operations below.

In S 110, first information sent by a second communication node is received, and the first information is configured to instruct the first communication node to initiate propagation delay measurement.

In an embodiment, the first information includes at least one of the following information: configuration information of round-trip time (RTT) measurement; indication information for initiating the propagation delay measurement; indication information for performing propagation delay compensation; or reference clock information.

In an embodiment, the first information is a radio resource control (RRC) message, and the configuration information of the RTT measurement includes at least one of a positioning reference signal (PRS), a channel-state information reference signal (CSI-RS), or a sounding reference signal (SRS).

In an embodiment, the indication information for initiating the propagation delay measurement includes at least one of the following information: an indication for triggering the initiation of the propagation delay measurement; an indication for triggering to report a value of the propagation delay measurement; an indication about an identity (ID) of an SRS; an indication about an identity of a PRS; an indication about an identity of a CSI-RS; a period of the propagation delay measurement; the receiving-transmitting (Rx-Tx) time difference of the second communication node; or a clock error group ID associated with the Rx-Tx time difference of the second communication node.

If the indication information for initiating the propagation delay measurement includes the indication for triggering the initiation of the propagation delay measurement, the method also includes sending the Rx-Tx time difference of the first communication node to the second communication node.

If the indication information for initiating the propagation delay measurement includes the period of the propagation delay measurement, the method also includes periodically sending the Rx-Tx time difference of the first communication node to the second communication node.

In an embodiment, the indication information for performing propagation delay compensation is indication information for performing propagation delay compensation by the first communication node or indication information for performing propagation delay pre-compensation by the second communication node.

If the indication information for performing propagation delay compensation is the indication information for performing propagation delay compensation by the first communication node, the method also includes receiving at least one of the Rx-Tx time difference of the second communication node sent by the second communication node or the clock error group ID associated with the Rx-Tx time difference of the second communication node.

If the indication information for performing propagation delay compensation is the indication information for performing propagation delay pre-compensation by the second communication node, the method also includes sending at least one of the Rx-Tx time difference of the first communication node or a clock error group ID associated with the Rx-Tx time difference of the first communication node to the second communication node.

In an embodiment, the reference clock information is sent by the second communication node in unicast, or the reference clock information is broadcast by the second communication node.

In S 120, a propagation delay is measured according to the first information.

In the present application, the RTT method may be used to measure the propagation delay.

In an embodiment, the method also includes receiving second information sent by the second communication node, and the second information includes at least one of downlink information transmission or a broadcast 9SIB9.

The second information includes at least one of the following information: enable indication information; disable indication information; indication information for performing propagation delay compensation using timing advance (TA); indication information for performing propagation delay compensation using the RTT; indication information indicating that the reference clock does not need to perform propagation delay compensation; or indication information indicating that the second communication node performs propagation delay pre-compensation.

In an embodiment, for a scenario where the first communication node is to switch from the second communication node to the third communication node, the method also includes sending survival time (ST) monitoring information to a third communication node, and the ST monitoring information is configured to instruct the third communication node to exit the ST state.

The ST monitoring information is included in at least one of the following information: a message 1 of random access information, a message 3 of random access information, handover complete information, or RRC reconfiguration complete information.

FIG. 4 is a flowchart of an information sending method according to an embodiment. As shown in FIG. 4, the method provided in this embodiment is applied to a second communication node (such as gNB). The method includes the operations below.

In S210, first information is sent to a first communication node, and the first information is configured to instruct the first communication node to initiate propagation delay measurement. In an embodiment, the first information includes at least one of the following information: configuration information of RTT measurement; indication information for initiating the propagation delay measurement; indication information for performing propagation delay compensation; or reference clock information.

In an embodiment, the first information is an RRC message, and the configuration information of the RTT measurement includes at least one of a PRS, a CSI-RS, or an SRS.

In an embodiment, the indication information for initiating the propagation delay measurement includes at least one of the following information: an indication for triggering the initiation of the propagation delay measurement; an indication for triggering to report a value of the propagation delay measurement; an indication about an identity of an SRS; an indication about an identity of a PRS; an indication about an identity of a CSI-RS; a period of the propagation delay measurement; the receiving-transmitting (Rx-Tx) time difference of the second communication node; or a clock error group ID associated with the Rx-Tx time difference of the second communication node.

If the indication information for initiating the propagation delay measurement includes the indication for triggering the initiation of the propagation delay measurement, the method also includes receiving the Rx-Tx time difference of the first communication node sent by the first communication node.

If the indication information for initiating the propagation delay measurement includes the period of the propagation delay measurement, the method also includes periodically receiving the Rx-Tx time difference of the first communication node sent by the first communication node.

In an embodiment, the indication information for performing propagation delay compensation is indication information for performing propagation delay compensation by the first communication node or indication information for performing propagation delay pre-compensation by the second communication node.

If the indication information for performing propagation delay compensation is the indication information for performing propagation delay compensation by the first communication node, the method also includes sending at least one of the Rx-Tx time difference of the second communication node or a clock error group ID associated with the Rx-Tx time difference of the second communication node to the first communication node.

If the indication information for performing propagation delay compensation is the indication information for performing propagation delay pre-compensation by the second communication node, the method also includes receiving at least one of the Rx-Tx time difference of the first communication node sent by the first communication node or a clock error group ID associated with the Rx-Tx time difference of the first communication node.

In an embodiment, the reference clock information is sent by the second communication node in unicast, or the reference clock information is broadcast by the second communication node.

In an embodiment, the method also includes at least one of the following operations: broadcasting second information, where the second information is SIB9; or sending second information to the first communication node.

The second information includes at least one of the following information: enable indication information; disable indication information; indication information for performing propagation delay compensation using TA; indication information for performing propagation delay compensation using the RTT; indication information indicating that the reference clock does not need to perform propagation delay compensation; or indication information indicating that the second communication node performs propagation delay pre-compensation.

In an embodiment, the method also includes the operations below.

First dedicated information is sent to a fourth communication node, where the first dedicated information is configured to request a propagation delay compensation value for RTT measurement. Second dedicated information sent by the fourth communication node is received, where the second dedicated information includes the propagation delay compensation value for the RTT measurement.

The first dedicated information includes any one of the following information: handover request acknowledgement information, path switch request information, context release complete information, context release information, paging information, and location report information. The second dedicated information includes any one of following information: handover command information, path switch request acknowledgement information, context release command information, downlink ran status transfer information, paging information, and location report control information.

In an embodiment, for a scenario where the first communication node is to switch from the second communication node to the third communication node, the method also includes receiving third dedicated information sent by a third communication node, where the first communication node includes configuration information of RTT measurement; sending handover information to the first communication node, where the handover information includes the configuration information of the RTT measurement.

In an embodiment, for a scenario where the first communication node is to switch from the second communication node to the third communication node, the method also includes receiving fourth dedicated information sent by a third communication node, where the fourth dedicated information is configured to request ST monitoring information; sending fifth dedicated information to the third communication node, where the fifth dedicated information includes the ST monitoring information.

FIG. 5 is a flowchart of another information sending method according to an embodiment. As shown in FIG. 5, the method provided in this embodiment is applied to a third communication node (such as gNB). The method includes the operations below.

In S310, third information is sent to a second communication node, the third information is dedicated information for a request, and a first communication node is to switch from the second communication node to the third communication node.

In an embodiment, the third information is third dedicated information, and the third dedicated information includes configuration information of RTT measurement.

In an embodiment, the third information is fourth dedicated information, and the fourth dedicated information is configured to request ST monitoring information; the method also includes receiving fifth dedicated information sent by the second communication node, where the fifth dedicated information includes the ST monitoring information.

Some example embodiments are listed below to illustrate the methods provided in FIGS. 3 to 5 of the embodiments of the present application. The following example embodiments may be implemented independently or in combination. In the following example embodiments, when a handover scenario does not exist, the first communication node is denoted as UE, the second communication node is denoted as gNB, and the fourth communication node is denoted as AMF; when a handover scenario exists, the first communication node is denoted as UE, the second communication node is denoted as source gNB, the third communication node is denoted as target gNB, and the fourth communication node is denoted as AMF.

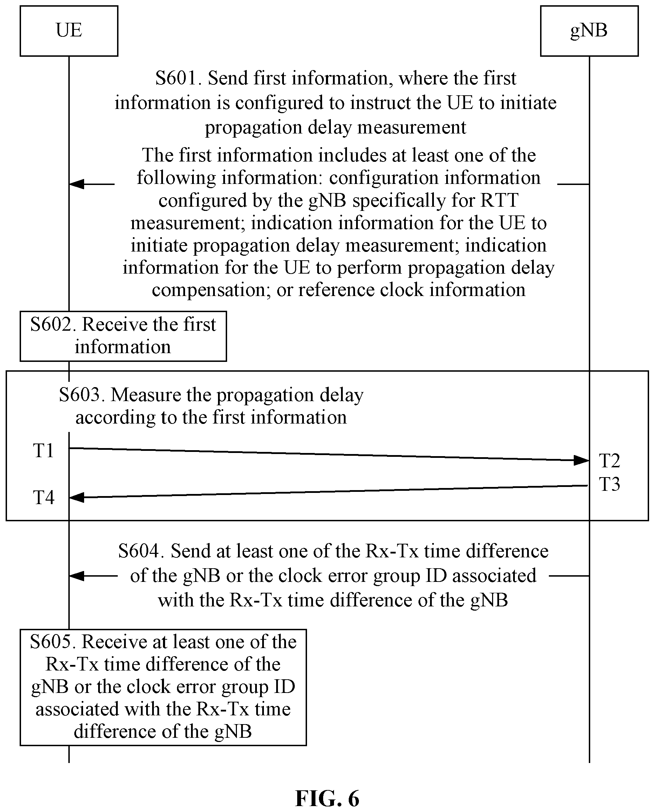

In a first example embodiment, a method based on RTT is proposed, in which the UE performs propagation delay compensation. Specifically, FIG. 6 is a diagram illustrating the flow interaction of an information transmission method according to an embodiment. As shown in FIG. 6, the method includes the operations below.

In S601, a gNB sends first information to UE, where the first information is configured to instruct the UE to initiate propagation delay measurement.

The first information includes at least one of the following information: configuration information configured by the gNB specifically for RTT measurement; indication information for the UE to initiate propagation delay measurement; indication information for performing propagation delay compensation; or reference clock information.

In an embodiment, the configuration information of the RTT measurement includes at least one of a PRS, a CSI-RS, or an SRS.

In an embodiment, the indication information for the UE to initiate propagation delay measurement includes at least one of the following information: an indication for triggering the UE to initiate propagation delay measurement; an indication for triggering to report a value of the propagation delay measurement; an indication about an identity of an SRS; an indication about an identity of a PRS; an indication about an identity of a CSI-RS; a period for the UE to perform propagation delay measurement; the Rx-Tx time difference of the gNB; or a clock error group ID associated with the gNB's Rx-Tx time difference.

If the indication information for the UE to initiate the propagation delay measurement includes the indication for triggering the UE to initiate propagation delay measurement, the method also includes sending the Rx-Tx time difference of the UE to the gNB.

If the indication information for the UE to initiate the propagation delay measurement includes the period of the propagation delay measurement, the method also includes periodically sending the Rx-Tx time difference of the UE to the gNB.

In an embodiment, the indication information for performing propagation delay compensation is the indication information for the UE to perform propagation delay compensation. The reference clock information may be sent to the UE by the gNB in unicast or may be broadcast by the gNB. Correspondingly, when the reference clock information is sent by the gNB to the UE in unicast, the indication information for performing propagation delay compensation is to instruct this UE to perform propagation delay compensation; when the reference clock information is broadcast by the gNB, the indication information for performing propagation delay compensation is to instruct all UE to perform propagation delay compensation.

Specifically, the gNB may send at least one of the configuration information of the RTT measurement, the indication information for the UE to initiate the propagation delay measurement, or the indication information for performing propagation delay compensation through an RRC message or a scheduled downlink control information (DCI) message.

The RRC message includes at least one of the following: RRC Reestablishment, RRC Reconfiguration, RRC Resume, RRC Reject, or RRC Setup. The scheduled DCI message indicates, through the LCID (logical channel ID) reserved in a downlink shared channel (DLSCH), a predefined media access control control element (MAC CE) format that contains the triggering of propagation delay measurement.

In S602, the UE receives the first information sent by the gNB.

In S603, the UE measures the propagation delay according to the first information.

After receiving the first information sent by the gNB, the UE initiates propagation delay measurement. Specifically, with reference to FIG. 6, the UE sends a data packet to the gNB at an occasion T1. The gNB receives the data packet at an occasion T2 and sends a data packet to the UE at an occasion T3. The UE indirectly receives the data packet at an occasion T4. That is, in the present application, the Rx-Tx time difference of the gNB is equal to (T3 - T2), and the Rx-Tx time difference of the UE is equal to (T4 - T1).

In an embodiment, the UE's measurement of the propagation delay may include at least one of the following: The UE periodically measures the propagation delay. The UE triggers the measurement when receiving the reference clock information sent by the gNB. In the case where the gNB sends the reference clock information in unicast, the UE triggers the measurement when initiating a request for reference clock information. The UE triggers the measurement when receiving the indication information for initiating propagation delay measurement. The UE triggers the measurement when receiving the indication information for performing propagation delay compensation (PDC).

The period value for the UE to periodically measure the propagation delay is configured by the UE or by the gNB. The period value is in nanoseconds (ns) or Tc (the basic time unit of NR) as the time unit, and the period value is the same as the period value of the gNB sending reference clock information in unicast/broadcast.

In S604, the gNB sends at least one of the Rx-Tx time difference of the gNB or the clock error group ID associated with the Rx-Tx time difference of the gNB to the UE.

In an embodiment, the gNB may send at least one of the Rx-Tx time difference of the gNB or the clock error group ID associated with the Rx-Tx time difference of the gNB through a scheduled MAC CE.

In S605, the UE receives at least one of the Rx-Tx time difference of the gNB sent by the gNB or the clock error group ID associated with the Rx-Tx time difference of the gNB.

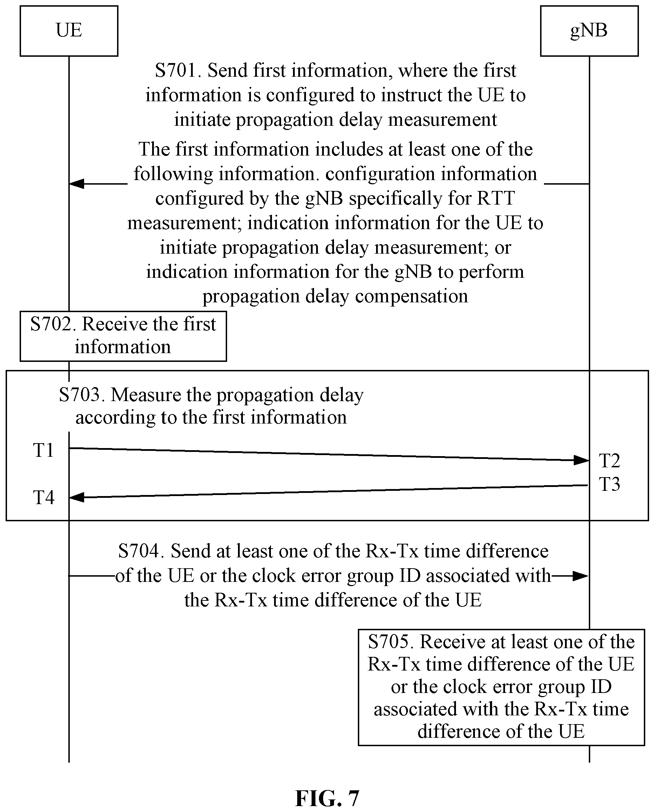

In a second example embodiment, a solution is proposed where the gNB performs propagation delay compensation based on the RTT method when the gNB sends the reference clock information in unicast. Specifically, FIG. 7 is a diagram illustrating the flow interaction of another information transmission method according to an embodiment. As shown in FIG. 7, the method includes the operations below.

In S701, a gNB sends first information to UE, where the first information is configured to instruct the UE to initiate propagation delay measurement.

The first information includes at least one of the following information: configuration information configured by the gNB specifically for RTT measurement; indication information for the UE to initiate propagation delay measurement; or indication information for performing propagation delay compensation.

In an embodiment, the configuration information of the RTT measurement includes at least one of a PRS, a CSI-RS, or an SRS.

In an embodiment, the indication information for the UE to initiate propagation delay measurement includes at least one of the following information: an indication for triggering the UE to initiate propagation delay measurement; an indication for triggering to report a value of the propagation delay measurement; an indication about an identity of an SRS; an indication about an identity of a PRS; an indication about an identity of a CSI-RS; a period for the UE to perform propagation delay measurement; the Rx-Tx time difference of the gNB; or a clock error group ID associated with the gNB's Rx-Tx time difference.

If the indication information for the UE to initiate the propagation delay measurement includes the indication for triggering the UE to initiate propagation delay measurement, the method also includes sending the Rx-Tx time difference of the UE to the gNB.

If the indication information for the UE to initiate the propagation delay measurement includes the period of the propagation delay measurement, the method also includes periodically sending the Rx-Tx time difference of the UE to the gNB.

In an embodiment, the indication information for performing propagation delay compensation is the indication information for the gNB to perform propagation delay compensation.

Specifically, the gNB may send at least one of the configuration information of the RTT measurement, the indication information for the UE to initiate the propagation delay measurement, or the indication information for performing propagation delay compensation through an RRC message or a scheduled DCI message.

The RRC message includes at least one of the following: RRC Reestablishment, RRC Reconfiguration, RRC Resume, RRC Reject, or RRC Setup. The scheduled DCI message indicates, through the LCID reserved in a DLSCH, a predefined MAC CE format that contains the triggering of propagation delay measurement.

In S702, the UE receives the first information sent by the gNB.

In S703, the UE measures the propagation delay according to the first information.

After receiving the first information sent by the gNB, the UE initiates propagation delay measurement. Specifically, with reference to FIG. 7, the UE sends a data packet to the gNB at time T1. The gNB receives the data packet at time T2 and sends a data packet to the UE at time T3. The UE indirectly receives the data packet at T4. That is, in the present application, the Rx-Tx time difference of the gNB is equal to (T3 - T2), and the Rx-Tx time difference of the UE is equal to (T4 - T1).

In an embodiment, the UE's measurement of the propagation delay may include at least one of the following: The UE periodically measures the propagation delay. The UE triggers the measurement when initiating a request for reference clock information. The UE triggers the measurement when receiving the indication information for initiating propagation delay measurement.

The period value for the UE to periodically measure the propagation delay is configured by the UE or by the gNB. The period value is in nanoseconds (ns) or Tc (the basic time unit of NR) as the time unit, and the period value is the same as the period value of the gNB sending the reference clock information in unicast.

In S704, the UE sends at least one of the Rx-Tx time difference of the UE or the clock error group ID associated with the Rx-Tx time difference of the UE to the gNB.

In an embodiment, the UE may send at least one of the Rx-Tx time difference of the UE or the clock error group ID associated with the Rx-Tx time difference of the UE through an RRC message or a predetermined MAC CE.

In S705, the gNB receives at least one of the Rx-Tx time difference of the UE sent by the UE or the clock error group ID associated with the Rx-Tx time difference of the UE.

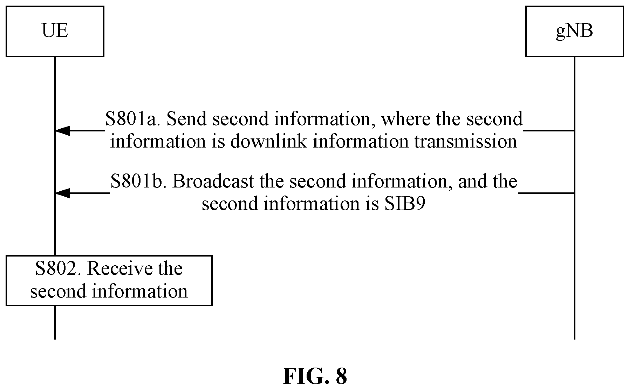

In a third example embodiment, an enabling/disabling solution based on the preceding first example embodiment is proposed. Specifically, FIG. 8 is a diagram illustrating the flow interaction of yet another information transmission method according to an embodiment. As shown in FIG. 8, the method includes the operations below.

In S801a, a gNB sends second information to UE, where the second information is downlink information transmission.

In the case where the gNB indicates in unicast whether the UE performs propagation delay compensation, the gNB indicates whether the UE performs propagation delay compensation through downlink information transmission (DLInformationTransfer), and the DLInformationTransfer includes enable indication information and/or disable indication information.

Specifically, the enable indication information includes at least one of the following: The UE needs to perform propagation delay compensation. The UE performs propagation delay compensation using the version 16 (R16) method. The UE performs propagation delay compensation using the version 17 (R17) method. The disable indication information includes at least one of the following: The reference clock error of the UE does not need to be compensated. The reference clock error of the UE does not need to be compensated, and the UE stops propagation delay measurement. The gNB has performed pre-compensation.

In an embodiment, the preceding information is indicated through 1 bit or 2 bits during the downlink information transmission. For example, in the case of 1 bit, 0 denotes enable (that is, the UE needs to perform propagation delay compensation), and 1 denotes disable (that is, the reference clock error of the UE does not need to be compensated). In the case of 2 bits, 00 indicates that the enable performs propagation delay compensation using the R16 method, and 01 indicates that the enable performs propagation delay compensation using the R17 method; 10 indicates disable and the reference clock error of the UE does not need to be compensated, and 11 indicates disable and the gNB has performed pre-compensation.

In S801b, the gNB broadcasts the second information, and the second information is SIB9.

In the case where the gNB indicates in broadcast whether the UE performs propagation delay compensation, the gNB indicates whether the UE performs propagation delay compensation through the SIB9, and the SIB9 includes enable indication information and/or disable indication information.

Specifically, the enable indication information includes at least one of the following: All UE needs to perform propagation delay compensation, all UE performs propagation delay compensation using the R16 method, or all UE performs propagation delay compensation using the R17 method. The disable indication information includes at least one of the following: The reference clock errors of all UE do not need to be compensated.

In an embodiment, the preceding information is indicated through 1 bit or 2 bits during the SIB transmission. For example, in the case of 1 bit, 0 denotes enable (that is, all UE needs to perform propagation delay compensation), and 1 denotes disable (that is, reference clock errors of all UE do not need to be compensated). In the case of 2 bits, 00 indicates that the enable performs propagation delay compensation using the R16 method, and 01 indicates that the enable performs propagation delay compensation using the R17 method; 10 indicates disable and the reference clock errors of all UE do not need to be compensated.

Any one of the preceding operations of S801a and S801b may be performed, or both operations may be performed, which is not specifically limited by this embodiment of the present application. In S802, the UE receives the second information sent by the gNB.

In an embodiment, the second information includes at least one of the following information: enable indication information; disable indication information; indication information for performing propagation delay compensation using TA; indication information for performing propagation delay compensation using the RTT; indication information indicating that the reference clock does not need to perform propagation delay compensation; or indication information indicating that the gNB performs propagation delay pre-compensation.

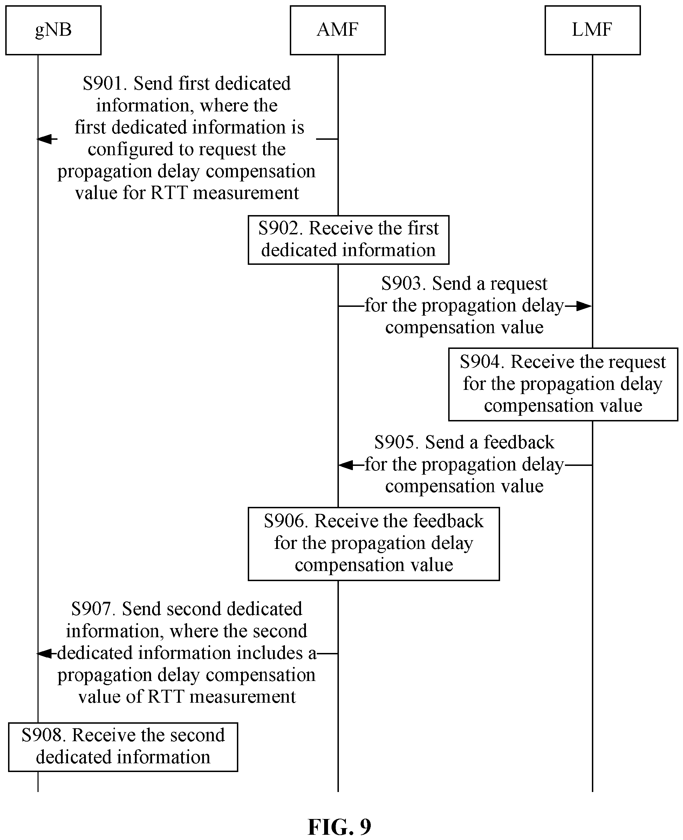

In a fourth example embodiment, a solution is proposed where the gNB requests the RTT-measured propagation delay compensation value from AMF when the gNB performs propagation delay compensation. Specifically, FIG. 9 is a diagram illustrating the flow interaction of yet another information transmission method according to an embodiment. As shown in FIG. 9, the method includes the operations below.

In S901, the gNB sends first dedicated information to AMF, where the first dedicated information is configured to request the propagation delay compensation value for RTT measurement.

When the gNB determines, by the capability reported by the UE and the configuration information of the gNB, that the gNB performs propagation delay compensation, the gNB requests the propagation delay compensation value measured by the RTT from AMF through the first dedicated information.

Specifically, the first dedicated information includes any one of the following information: handover request acknowledgement information, path switch request information, UE context release complete information, UE context release information, paging information, or location report information.

In S902, AMF receives the first dedicated information sent by the gNB.

In S903, AMF sends a request for the propagation delay compensation value to LMF.

After receiving the first dedicated information sent by the gNB, AMF sends a request for the propagation delay compensation value to LMF by using the predefined propagation delay compensation value request information or the positioning service request.

In S904, LMF receives the request for the propagation delay compensation value sent by AMF. In S905, LMF sends a feedback for the propagation delay compensation value to AMF.

After receiving the request for the propagation delay compensation value sent by AMF, LMF sends a feedback for the propagation delay compensation value to AMF through the predefined propagation delay compensation value feedback information or the positioning service reply.

In S906, AMF receives the feedback for the propagation delay compensation value sent by LMF. In S907, AMF sends second dedicated information to the gNB, where the second dedicated information includes a propagation delay compensation value of RTT measurement.

After receiving the feedback for the propagation delay compensation value sent by LMF, AMF sends the propagation delay compensation value of RTT measurement to the gNB through the second dedicated information.

Specifically, the second dedicated information includes any one of the following information: handover command information, path switch request acknowledgement information, UE context release command information, downlink ran status transfer information, paging information, or location reporting control information.

In S908, the gNB receives the second dedicated information sent by AMF.

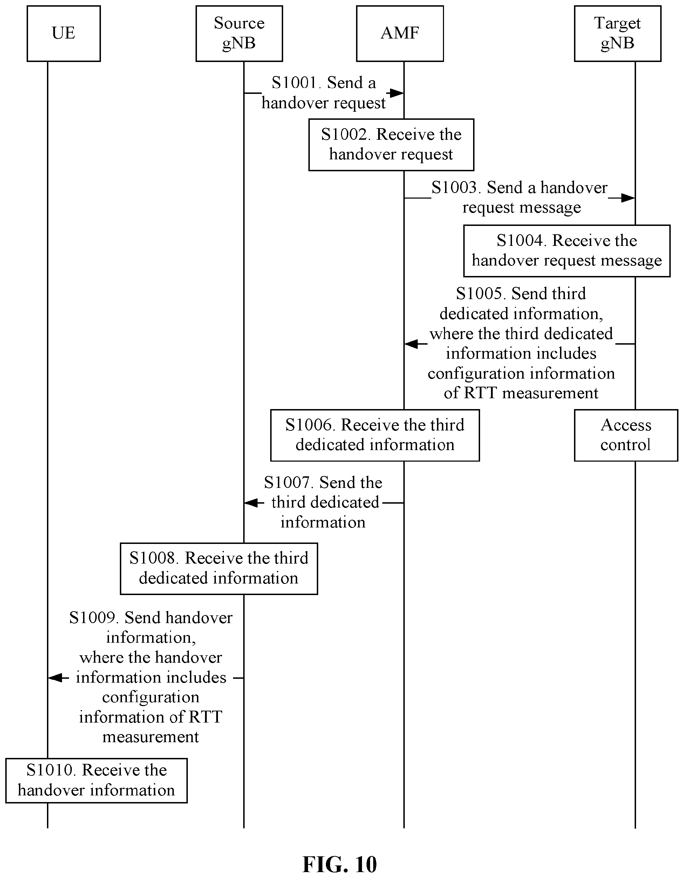

In a fifth example embodiment, a solution is proposed where during the mobile handover process of the UE (that is, the UE is about to switch from the source gNB to the target gNB), the target gNB forwards the resources configured by the target gNB for RTT measurement through the source gNB to achieve accurate synchronization of the reference clock information with the UE faster. Specifically, FIG. 10 is a diagram illustrating the flow interaction of yet another information transmission method according to an embodiment. As shown in FIG. 10, the method includes the operations below.

In S 1001, the source gNB sends a handover request to AMF.

In S1002, AMF receives the handover request sent by the source gNB.

In S1003, AMF sends a handover request message to the target gNB.

In S1004, the target gNB receives the handover request message sent by AMF.

In S1005, the target gNB sends third dedicated information to AMF, where the third dedicated information includes configuration information of RTT measurement.

After receiving the handover request message sent by AMF, the target gNB sends the third dedicated information that includes the configuration information (at least one of the PRS, the CSI-RS, or the SRS) of the RTT measurement configured by the target gNB to AMF.

In an embodiment, the third dedicated information may be dedicated signaling or handover request acknowledgement signaling. The dedicated signaling includes at least one of the following: handover request acknowledgement, path switch request, UE context release complete, UE context release, paging, or location report.

In S1006, AMF receives the third dedicated information sent by the target gNB.

In S1007, AMF sends the third dedicated information to the source gNB.

After receiving the third dedicated information sent by the target gNB, AMF forwards the third dedicated information to the source gNB through dedicated signaling or handover request acknowledgement signaling. This dedicated signaling includes at least one of the following: handover command, path switch request acknowledge, UE context release command, downlink ran status transfer, paging (PAGING), or location reporting control.

In S 1008, the source gNB receives the third dedicated information sent by AMF.

In S 1009, the source gNB sends handover information to the UE, where the handover information includes configuration information of RTT measurement.

After receiving the third dedicated information sent by AMF, the source gNB sends handover information including the configuration information of RTT measurement to the UE.

In S1010, the UE receives the handover information sent by the source gNB.

After the UE receives the handover information sent by the source gNB and the handover is completed, the UE initiates RTT measurement.

In a sixth example embodiment, a situation is proposed where during the mobile handover process of the UE (that is, the UE is about to switch from the source gNB to the target gNB), the source gNB continues to send data packets to the UE after initiating a handover request; if the transmission is successful, the ST state does not need to be entered or maintained, but the target gNB has learned the ST state information, which will cause state inconsistency between the target gNB and the UE.

During the mobile handover process, the UE indicates to the target gNB that a data packet has been successfully sent through ST monitoring information after successfully receiving the data packet from the source gNB, so as to ensure the consistency of the ST state between the target gNB and the UE.

Specifically, the ST monitoring information includes at least one of the following: During the handover process, the source gNB sends the last data packet successfully, indicating that the source gNB exits the ST state, indicating that the target gNB exits the ST state, or indicating that the target gNB uses low reliability to send data packets.

The handover may be divided into handover between gNBs and handover between gNB-DUs.

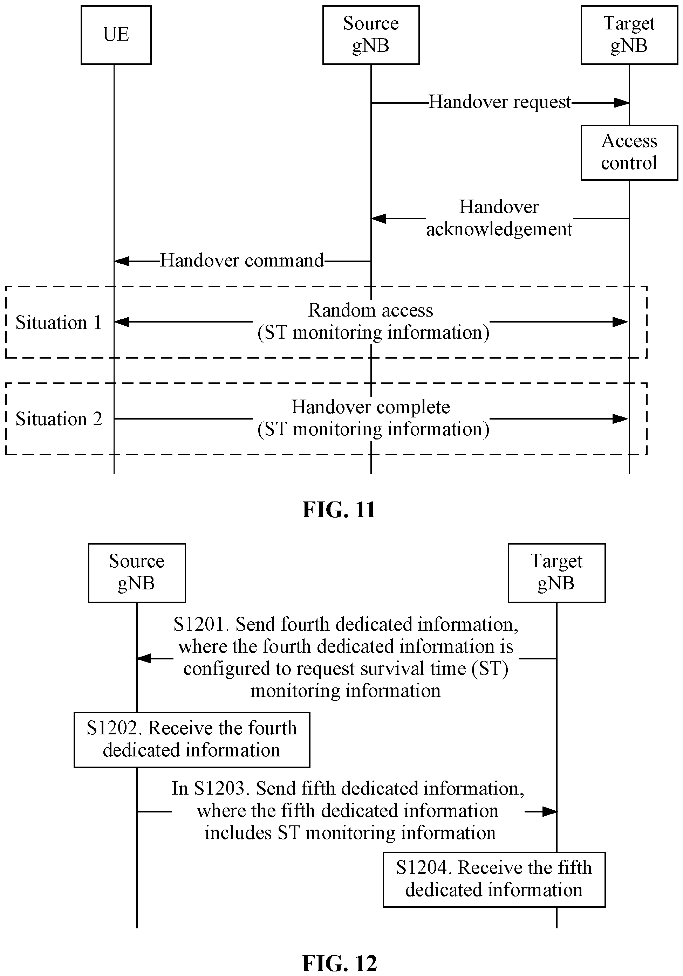

Regarding the handover between gNBs, FIG. 11 is a diagram of a handover process according to an embodiment. FIG. 12 is a diagram illustrating the flow interaction of yet another information transmission method according to an embodiment. As shown in FIG. 12, the method includes the operations below.

In S1201, the target gNB sends fourth dedicated information to the source gNB, where the fourth dedicated information is configured to request survival time (ST) monitoring information.

In downlink services, the gNB implements the ST monitoring mechanism. After the target gNB acquires the ST monitoring information from the source gNB, if the ST state of the source gNB changes, the UE instructs the target gNB to exit the ST state through the ST monitoring information. The ST monitoring information is included in at least one of the following information: a message 1 of the UE's random access information, a message 3 of the UE's random access information, or handover complete information.

Alternatively, if the ST state of the source gNB changes during the handover process, the target gNB requests survival time (ST) monitoring information from the source gNB through the fourth dedicated information during the handover process or after the handover is completed.

In S 1202, the source gNB receives the fourth dedicated information sent by the target gNB.

In S1203, the source gNB sends fifth dedicated information to the target gNB, where the fifth dedicated information includes ST monitoring information.

The source gNB sends the ST monitoring information to the target gNB through the fifth dedicated information.

In an embodiment, the fourth dedicated information and the fifth dedicated information are predefined UE-level signaling.

In S 1204, the target gNB receives the fifth dedicated information sent by the source gNB.

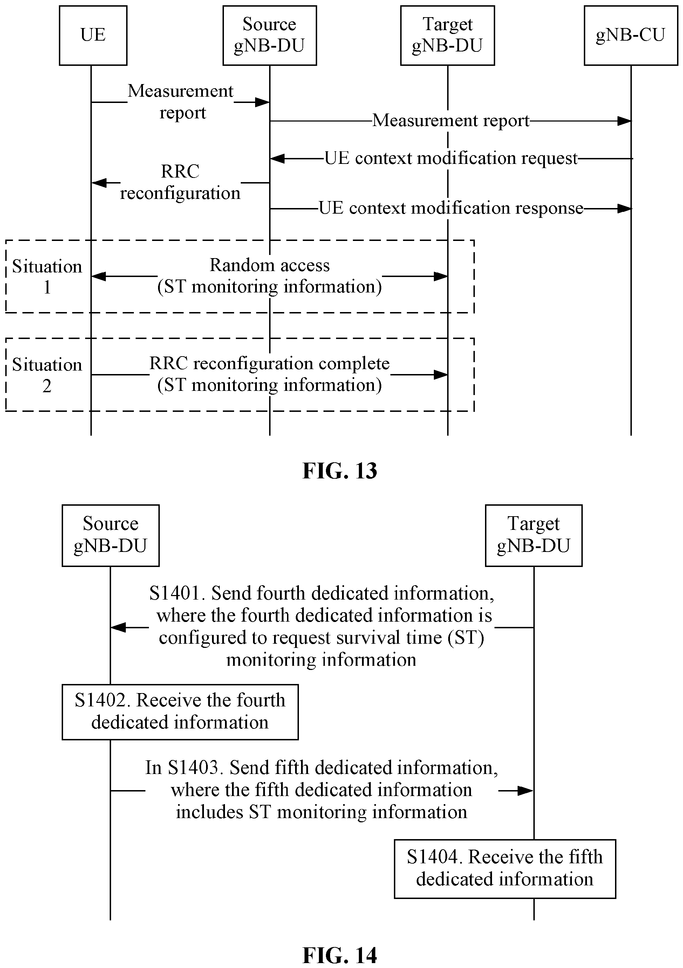

For the handover between gNB-DUs, FIG. 13 is a diagram of another handover process according to an embodiment. FIG. 14 is a diagram illustrating the flow interaction of yet another information transmission method according to an embodiment. As shown in FIG. 14, the method includes the operations below.

In S1401, the target gNB-DU sends fourth dedicated information to the source gNB-DU, where the fourth dedicated information is configured to request survival time (ST) monitoring information.

In downlink services, the gNB implements the ST monitoring mechanism. After the target gNB-DU acquires the ST monitoring information from the source gNB-DU, if the ST state of the source gNB-DU changes, the UE instructs the target gNB-DU to exit the ST state through the ST monitoring information. The ST monitoring information is included in at least one of the following information: a message 1 of the UE's random access information, a message 3 of the UE's random access information, or RRC reconfiguration complete information.

Alternatively, if the ST state of the source gNB-DU changes during the handover process, the target gNB-DU requests survival time (ST) monitoring information from the source gNB-DU through the fourth dedicated information during the handover process or after the handover is completed.

In S1402, the source gNB-DU receives the fourth dedicated information sent by the target gNB-DU.

In S1403, the source gNB-DU sends fifth dedicated information to the target gNB-DU, where the fifth dedicated information includes ST monitoring information.

The source gNB-DU sends the ST monitoring information to the target gNB-DU through the fifth dedicated information.

In an embodiment, the fourth dedicated information and the fifth dedicated information are predefined UE-level signaling.

In S1404, the target gNB-DU receives the fifth dedicated information sent by the source gNB-DU.

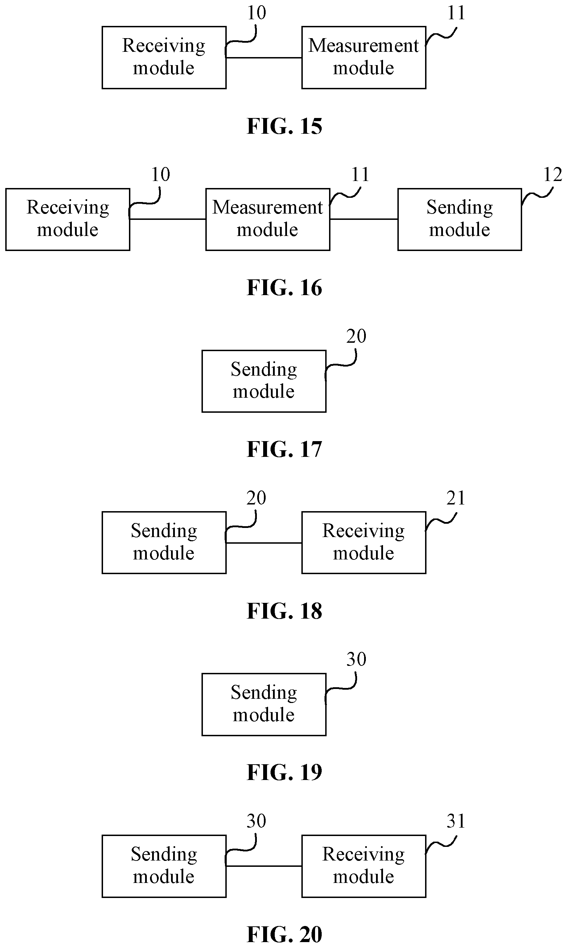

FIG. 15 is a diagram illustrating the structure of an information receiving apparatus according to an embodiment. The apparatus may be configured in a first communication node. As shown in FIG. 15, the apparatus includes a receiving module 10 and a measurement module 11.

The receiving module 10 is configured to receive first information sent by a second communication node, and the first information is configured to instruct the first communication node to initiate propagation delay measurement.

The measurement module 11 is configured to measure a propagation delay according to the first information.

The information receiving apparatus provided in this embodiment is configured to perform the information receiving method of the preceding embodiments. The implementation principles and technical effects of the information receiving apparatus provided by this embodiment are similar to those of the preceding embodiments and are not repeated herein.

In an embodiment, the first information includes at least one of the following information: configuration information of round-trip time (RTT) measurement; indication information for initiating the propagation delay measurement; indication information for performing propagation delay compensation; or reference clock information.

In an embodiment, the first information is a radio resource control (RRC) message, and the configuration information of the RTT measurement includes at least one of a positioning reference signal (PRS), a channel-state information reference signal (CSI-RS), or a sounding reference signal (SRS).

In an embodiment, the indication information for initiating the propagation delay measurement includes at least one of the following information: an indication for triggering the initiation of the propagation delay measurement; an indication for triggering to report a value of the propagation delay measurement; an indication about an identity (ID) of an SRS; an indication about an identity of a PRS; an indication about an identity of a CSI-RS; a period of the propagation delay measurement; the receiving-transmitting (Rx-Tx) time difference of the second communication node; or a clock error group ID associated with the Rx-Tx time difference of the second communication node.

In an embodiment, with reference to FIG. 15, FIG. 16 is a diagram illustrating the structure of another information receiving apparatus according to an embodiment. The indication information for initiating the propagation delay measurement includes the indication for triggering the initiation of the propagation delay measurement; the apparatus also includes a sending module 12.

The sending module is configured to send the Rx-Tx time difference of the first communication node to the second communication node.

In an embodiment, the indication information for initiating the propagation delay measurement includes the period of the propagation delay measurement; the sending module is also configured to periodically send the Rx-Tx time difference of the first communication node to the second communication node.

In an embodiment, the indication information for performing propagation delay compensation is indication information for performing propagation delay compensation by the first communication node or indication information for performing propagation delay pre-compensation by the second communication node.

In an embodiment, the reference clock information is sent by the second communication node in unicast, or the reference clock information is broadcast by the second communication node.

In an embodiment, the indication information for performing propagation delay compensation is indication information for performing propagation delay compensation by the first communication node; the receiving module is also configured to receive at least one of the Rx-Tx time difference of the second communication node sent by the second communication node or a clock error group ID associated with the Rx-Tx time difference of the second communication node.

In an embodiment, the indication information for performing propagation delay compensation is the indication information for performing propagation delay pre-compensation by the second communication node; the sending module is also configured to send at least one of the Rx-Tx time difference of the first communication node or a clock error group ID associated with the Rx-Tx time difference of the first communication node to the second communication node.

In an embodiment, the receiving module is also configured to receive second information sent by the second communication node, and the second information includes at least one of downlink information transmission or a broadcast system information block 9SIB9.

In an embodiment, the second information includes at least one of the following information: enable indication information; disable indication information; indication information for performing propagation delay compensation using TA; indication information for performing propagation delay compensation using the RTT; indication information indicating that the reference clock does not need to perform propagation delay compensation; or indication information indicating that the second communication node performs propagation delay pre-compensation.

In an embodiment, the sending module is also configured to send survival time (ST) monitoring information to a third communication node, where the first communication node is to switch from the second communication node to the third communication node, and the ST monitoring information is configured to instruct the third communication node to exit the ST state.

In an embodiment, the ST monitoring information is included in at least one of the following information: a message 1 of random access information, a message 3 of random access information, handover complete information, or RRC reconfiguration complete information.

FIG. 17 is a diagram illustrating the structure of an information sending apparatus according to an embodiment. The apparatus may be configured in a second communication node. As shown in FIG. 17, the apparatus includes a sending module 20.

The sending module 20 is configured to send first information to a first communication node, and the first information is configured to instruct the first communication node to initiate propagation delay measurement.

The information sending apparatus provided in this embodiment is configured to perform the information sending method of the preceding embodiments. The implementation principles and technical effects of the information sending apparatus provided by this embodiment are similar to those of the preceding embodiments and are not repeated herein.

In an embodiment, the first information includes at least one of the following information: configuration information of round-trip time (RTT) measurement; indication information for initiating the propagation delay measurement; indication information for performing propagation delay compensation; or reference clock information.

In an embodiment, the first information is a radio resource control (RRC) message, and the configuration information of the RTT measurement includes at least one of a positioning reference signal (PRS), a channel-state information reference signal (CSI-RS), or a sounding reference signal (SRS).

In an embodiment, the indication information for initiating the propagation delay measurement includes at least one of the following information: an indication for triggering the initiation of the propagation delay measurement; an indication for triggering to report a value of the propagation delay measurement; an indication about an identity (ID) of an SRS; an indication about an identity of a PRS; an indication about an identity of a CSI-RS; a period of the propagation delay measurement; the receiving-transmitting (Rx-Tx) time difference of the second communication node; or a clock error group ID associated with the Rx-Tx time difference of the second communication node.

In an embodiment, with reference to FIG. 17, FIG. 18 is a diagram illustrating the structure of another information sending apparatus according to an embodiment. The indication information for initiating the propagation delay measurement includes the indication for triggering the initiation of the propagation delay measurement; the apparatus also includes a receiving module 21.

The receiving module 21 is configured to receive the Rx-Tx time difference of the first communication node sent by the first communication node.

In an embodiment, the indication information for initiating the propagation delay measurement includes the period of the propagation delay measurement; the receiving module 21 is also configured to periodically receive the Rx-Tx time difference of the first communication node sent by the first communication node.

In an embodiment, the indication information for performing propagation delay compensation is indication information for performing propagation delay compensation by the first communication node or indication information for performing propagation delay pre-compensation by the second communication node.

In an embodiment, the reference clock information is sent by the second communication node in unicast, or the reference clock information is broadcast by the second communication node.

In an embodiment, the indication information for performing propagation delay compensation is indication information for performing propagation delay compensation by the first communication node; the sending module 20 is also configured to send at least one of the Rx-Tx time difference of the second communication node or a clock error group ID associated with the Rx-Tx time difference of the second communication node to the first communication node.

In an embodiment, the indication information for performing propagation delay compensation is the indication information for performing propagation delay pre-compensation by the second communication node; the receiving module 21 is also configured to receive at least one of the Rx-Tx time difference of the first communication node sent by the first communication node or a clock error group ID associated with the Rx-Tx time difference of the first communication node. In an embodiment, the sending module 20 is also configured to perform at least one of the following operations: broadcasting second information, where the second information is a system information block 9SIB9; or sending second information to the first communication node.

In an embodiment, the second information includes at least one of the following information: enable indication information; disable indication information; indication information for performing propagation delay compensation using TA; indication information for performing propagation delay compensation using the RTT; indication information indicating that the reference clock does not need to perform propagation delay compensation; or indication information indicating that the second communication node performs propagation delay pre-compensation.

In an embodiment, the sending module 20 is also configured to send first dedicated information to a fourth communication node, where the first dedicated information is configured to request the propagation delay compensation value for RTT measurement; and the receiving module 21 is also configured to receive second dedicated information sent by the fourth communication node, where the second dedicated information includes the propagation delay compensation value for the RTT measurement.

In an embodiment, the first dedicated information includes any one of the following information: handover request acknowledgement information, path switch request information, context release complete information, context release information, paging information, and location report information.

The second dedicated information includes any one of following information: handover command information, path switch request acknowledgement information, context release command information, downlink ran status transfer information, paging information, and location report control information.

In an embodiment, the receiving module 21 is also configured to receive third dedicated information sent by a third communication node, where the first communication node is to switch from the second communication node to the third communication node, and the third dedicated information includes configuration information of RTT measurement; and the sending module 20 is also configured to send handover information to the first communication node, where the handover information includes the configuration information of the RTT measurement.

In an embodiment, the receiving module 21 is also configured to receive fourth dedicated information sent by a third communication node, where the first communication node is to switch from the second communication node to the third communication node, and the fourth dedicated information is configured to request survival time (ST) monitoring information; and the sending module 20 is also configured to send fifth dedicated information to the third communication node, where the fifth dedicated information includes the ST monitoring information.

FIG. 19 is a diagram illustrating the structure of another information sending apparatus according to an embodiment. The apparatus may be configured in a third communication node. As shown in FIG. 19, the apparatus includes a sending module 30.

The sending module 30 is configured to send third information to a second communication node, the third information is dedicated information for a request, and a first communication node is to switch from the second communication node to the third communication node.

The information sending apparatus provided in this embodiment is configured to perform the information sending method of the preceding embodiments. The implementation principles and technical effects of the information sending apparatus provided by this embodiment are similar to those of the preceding embodiments and are not repeated herein.

In an embodiment, the third information is third dedicated information, and the third dedicated information includes configuration information of RTT measurement.

In an embodiment, with reference to FIG. 19, FIG. 20 is a diagram illustrating the structure of yet another information sending apparatus according to an embodiment. The third information is fourth dedicated information, and the fourth dedicated information is configured to request survival time (ST) monitoring Information. The apparatus also includes a receiving module 31. The receiving module 31 is configured to receive fifth dedicated information sent by the second communication node, where the fifth dedicated information includes the ST monitoring information.

An embodiment of the present application also provides a communication node. The communication node includes a processor, which is configured to, when executing a computer program, perform the method provided in any embodiment of the present application. Specifically, the communication node may be an access network device or a terminal device provided in any embodiment of the present application, which is not specifically limited in the present application. Illustratively, the following embodiments separately provide a diagram illustrating the structure of a communication node as a base station or as UE.

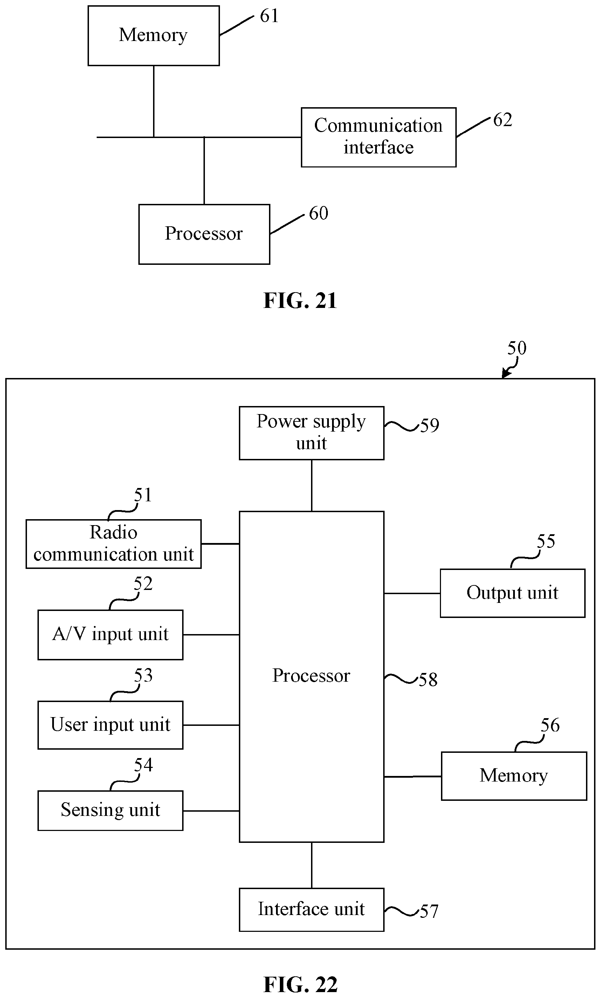

FIG. 21 is a diagram illustrating the structure of a base station according to an embodiment. As shown in FIG. 21, the base station includes a processor 60, a memory 61, and a communication interface 62. One or more processors 60 may be provided in the base station, and one processor 60 is used as an example in FIG. 21. The processor 60, the memory 61, and the communication interface 62 that are in the base station may be connected through a bus or in other manners. In FIG. 21, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method in the embodiments of the present application. The processor 60 runs the software programs, instructions, and modules stored in the memory 61 to execute at least one of function applications and data processing of the base station, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include but are not limited to, the Internet, an intranet, a network, a communication network, and a combination thereof.

The communication interface 62 may be configured to receive and send data.

FIG. 22 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 22, a UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 22 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application also provide a computer-readable storage medium. The computer-readable storage medium is configured to store a computer program which, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer readable storage medium includes (a non-exhaustive list) an electrical connection having one or more wires, a portable computer disk, a hard disk, a random access memory (RAM), a read-only memory (ROM), an electrically erasable, programmable read-only memory (EPROM), a flash memory, an optical fiber, a portable compact disk read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device. Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. A data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. An information receiving method, applied to a first communication node and comprising:
receiving first information sent by a second communication node, wherein the first information is configured to instruct the first communication node to initiate propagation delay measurement; and
measuring a propagation delay according to the first information.

2. The method of claim 1, wherein the first information comprises at least one of following information:
configuration information of round-trip time, RTT, measurement;
indication information for initiating the propagation delay measurement;
indication information for performing propagation delay compensation; or
reference clock information.

3. The method of claim 2, wherein the first information is a radio resource control, RRC, message, and the configuration information of the RTT measurement comprises at least one of a positioning reference signal, PRS, a channel-state information reference signal, CSI-RS, or a sounding reference signal, SRS.

4. The method of claim 2, wherein the indication information for initiating the propagation delay measurement comprises at least one of following information:
an indication for triggering an initiation of the propagation delay measurement;
an indication for triggering to report a value of the propagation delay measurement;
an indication about an identity, ID, of an SRS;
an indication about an identity of a PRS;
an indication about an identity of a CSI-RS;
a period of the propagation delay measurement;
a receiving-transmitting, Rx-Tx, time difference of the second communication node; or
a clock error group ID associated with the Rx-Tx time difference of the second communication node.

5. The method of claim 4, wherein the indication information for initiating the propagation delay measurement comprises the indication for triggering the initiation of the propagation delay measurement; and the method further comprises:
sending an Rx-Tx time difference of the first communication node to the second communication node.

6. The method of claim 4, wherein the indication information for initiating the propagation delay measurement comprises the period of the propagation delay measurement: and the method further comprises:
periodically sending an Rx-Tx time difference of the first communication node to the second communication node.

7. The method of claim 2, wherein the indication information for performing propagation delay compensation is indication information for performing propagation delay compensation by the first communication node or indication information for performing propagation delay pre-compensation by the second communication node.

8. The method of claim 2, wherein the reference clock information is sent by the second communication node in unicast, or the reference clock information is broadcast by the second communication node.

9. The method of claim 7, wherein the indication information for performing propagation delay compensation is the indication information for performing propagation delay compensation by the first communication node; and the method further comprises:
receiving at least one of an Rx-Tx time difference of the second communication node sent by the second communication node or a clock error group ID associated with an Rx-Tx time difference of the second communication node.

10. The method of claim 7, wherein the indication information for performing propagation delay compensation is the indication information for performing propagation delay pre-compensation by the second communication node; and the method further comprises:
sending at least one of an Rx-Tx time difference of the first communication node or a clock error group ID associated with an Rx-Tx time difference of the first communication node to the second communication node.

11. The method of claim 1, further comprising:
receiving second information sent by the second communication node, wherein the second information comprises at least one of downlink information transmission or a broadcast system information block 9SIB9.

12. The method of claim 11, wherein the second information comprises at least one of following information:
enable indication information; disable indication information; indication information for performing propagation delay compensation using timing advance, TA; indication information for performing propagation delay compensation using the RTT; indication information indicating that a reference clock does not need to perform propagation delay compensation; or indication information indicating that the second communication node performs propagation delay pre-compensation.

13. The method of claim 1, further comprising:
sending survival time, ST, monitoring information to a third communication node, wherein the first communication node is to switch from the second communication node to the third communication node, and the ST monitoring information is configured to instruct the third communication node to exit a ST state.

14. The method of claim 13, wherein the ST monitoring information is comprised in at least one of following information: a message 1 of random access information, a message 3 of random access information, handover complete information, or RRC reconfiguration complete information.

15. An information sending method, applied to a second communication node and comprising:
sending first information to a first communication node, wherein the first information is configured to instruct the first communication node to initiate propagation delay measurement.

16. The method of claim 15, wherein the first information comprises at least one of following information:
configuration information of round-trip time, RTT, measurement;
indication information for initiating the propagation delay measurement;
indication information for performing propagation delay compensation; or
reference clock information.

17. The method of claim 16, wherein the first information is a radio resource control, RRC, message, and the configuration information of the RTT measurement comprises at least one of a positioning reference signal, PRS, a channel-state information reference signal, CSI-RS, or a sounding reference signal, SRS.

18. The method of claim 16, wherein the indication information for initiating the propagation delay measurement comprises at least one of following information:
an indication for triggering an initiation of the propagation delay measurement;
an indication for triggering to report a value of the propagation delay measurement;
an indication about an identity, ID, of an SRS;
an indication about an identity of a PRS;
an indication about an identity of a CSI-RS;
a period of the propagation delay measurement;
a receiving-transmitting, Rx-Tx, time difference of the second communication node; or
a clock error group ID associated with the Rx-Tx time difference of the second communication node.

19. The method of claim 18, wherein the indication information for initiating the propagation delay measurement comprises the indication for triggering the initiation of the propagation delay measurement; and the method further comprises:
receiving an Rx-Tx time difference of the first communication node sent by the first communication node.

20. The method of claim 18, wherein the indication information for initiating the propagation delay measurement comprises the period of the propagation delay measurement: and the method further comprises:
periodically receiving an Rx-Tx time difference of the first communication node sent by the first communication node.

21. The method of claim 16, wherein the indication information for performing the propagation delay compensation is indication information for performing propagation delay compensation by the first communication node or indication information for performing propagation delay pre-compensation by the second communication node.

22. The method of claim 16, wherein the reference clock information is sent by the second communication node in unicast, or the reference clock information is broadcast by the second communication node.

23. The method of claim 21, wherein the indication information for performing propagation delay compensation is the indication information for performing propagation delay compensation by the first communication node; and the method further comprises:
sending at least one of an Rx-Tx time difference of the second communication node or a clock error group ID associated with an Rx-Tx time difference of the second communication node to the first communication node.

24. The method of claim 21, wherein the indication information for performing propagation delay compensation is the indication information for performing propagation delay pre-compensation by the second communication node; and the method further comprises:
receiving at least one of an Rx-Tx time difference of the first communication node sent by the first communication node or a clock error group ID associated with an Rx-Tx time difference of the first communication node.

25. The method of claim 15, further comprising at least one of following operations:
broadcasting second information, wherein the second information is a system information block 9SIB9; or
sending second information to the first communication node.

26. The method of claim 25, wherein the second information comprises at least one of following information:
enable indication information; disable indication information; indication information for performing propagation delay compensation using timing advance, TA; indication information for performing propagation delay compensation using the RTT; indication information indicating that a reference clock does not need to perform propagation delay compensation; or indication information indicating that the second communication node performs propagation delay pre-compensation.

27. The method of claim 15, further comprising:
sending first dedicated information to a fourth communication node, wherein the first dedicated information is configured to request a propagation delay compensation value for RTT measurement; and
receiving second dedicated information sent by the fourth communication node, wherein the second dedicated information comprises the propagation delay compensation value for the RTT measurement.

28. The method of claim 27, wherein
the first dedicated information comprises any one of following information: handover request acknowledgement information, path switch request information, context release complete information, context release information, paging information, and location report information; and
the second dedicated information comprises any one of following information: handover command information, path switch request acknowledgement information, context release command information, downlink ran status transfer information, paging information, and location report control information.

29. The method of claim 15, further comprising:
receiving third dedicated information sent by a third communication node, wherein the first communication node is to switch from the second communication node to the third communication node, and the third dedicated information comprises configuration information of RTT measurement; and
sending handover information to the first communication node, wherein the handover information comprises the configuration information of the RTT measurement.

30. The method of claim 15, further comprising:
receiving fourth dedicated information sent by a third communication node, wherein the first communication node is to switch from the second communication node to the third communication node, and the fourth dedicated information is configured to request survival time, ST, monitoring information; and
sending fifth dedicated information to the third communication node, wherein the fifth dedicated information comprises the ST monitoring information.

31. An information sending method, applied to a third communication node and comprising:
sending third information to a second communication node, wherein the third information is dedicated information for a request, and a first communication node is to switch from the second communication node to the third communication node.

32. The method of claim 31, wherein the third information is third dedicated information, and the third dedicated information comprises configuration information of RTT measurement.

33. The method of claim 31, wherein the third information is fourth dedicated information, and the fourth dedicated information is configured to request survival time, ST, monitoring information; and the method further comprises:
receiving fifth dedicated information sent by the second communication node, wherein the fifth dedicated information comprises the ST monitoring information.

34. A communication node, comprising a processor that is configured to, when executing a computer program, implement the information receiving method of any one of claims 1 to 14, implement the information sending method of any one of claims 15 to 30, or implement the information sending method of any one of claims 31 to 33.

35. A computer-readable storage medium storing a computer program that, when executed by a processor, implements the information receiving method of any one of claims 1 to 14, implements the information sending method of any one of claims 15 to 30, or implements the information sending method of any one of claims 31 to 33.
